# EUROPEAN PATENT APPLICATION

(11) **EP 4 318 444 A1**
(43) Date of publication of application: **07.02.2024**
(21) Application number: 22790991.8
(22) Date of filing: 18.04.2022
(51) Int. Cl.: G09F 9/30

(54) **SCREEN COVER PLATE, FOLDING SCREEN MODULE AND ELECTRONIC DEVICE**

(30) Priority: 22.04.2021 CN 202110437109
(71) Applicant: Huawei Technologies Co., Ltd., Shenzhen, Guangdong 518129 (CN)
(72) Inventor: LIANG, Xiao, Shenzhen, Guangdong 518129 (CN); WANG, Jie, Shenzhen, Guangdong 518129 (CN); LI, Min, Shenzhen, Guangdong 518129 (CN)
(74) Representative: Epping - Hermann - Fischer
(86) International application number: PCT/CN2022/087379
(87) International publication number: WO 2022/222883

(57) **Abstract**

This application relates to a screen cover, a foldable display module, and an electronic device. The screen cover is configured to cover a flexible display. The screen cover includes a buffer layer, a first film layer, and a second film layer. The buffer layer absorbs stress of impact through elastic deformation. The first film layer covers a side that is of the buffer layer and that is away from the flexible display, a modulus of the first film layer is greater than a modulus of the buffer layer, and the first film layer is bonded to the buffer layer by using a first adhesive layer. The second film layer covers a side that is of the buffer layer and that is close to the flexible display, a modulus of the second film layer is greater than the modulus of the buffer layer, and the second film layer is bonded to the buffer layer by using a second adhesive layer. This application can improve impact resistance performance of the foldable display module.

## Description

This application claims priority to Chinese Patent Application No. 202110437109.1, filed with the China National Intellectual Property Administration on April 22, 2021 and entitled "SCREEN COVER, FOLDABLE DISPLAY MODULE, AND ELECTRONIC DEVICE", which is incorporated herein by reference in its entirety.

### TECHNICAL FIELD

This application relates to the field of electronic device technologies, and in particular, to a screen cover, a foldable display module, and an electronic device.

### BACKGROUND

A flexible foldable display, as a new form of a mobile phone, brings new user experience. However, because a large quantity of flexible polymer materials need to be used in a laminated design (especially a design of a screen cover) of a foldable display module, rigidity and strength of the flexible polymer materials are far lower than those of inorganic materials (for example, cover glass) used in a bar-type phone or a curved-display mobile phone. For example, in Huawei's first-generation outward-folding display screen module, the cover uses a colorless polyimide film with a thickness of 80 µm. Compared with 500 µm cover glass in a bar-type phone, rigidity of the cover is less than 1/2000 of that of the cover glass in the bar-type phone, causing weak resistance to impact and deformation. An accompanying reliability problem of the foldable display module significantly reduces user experience.

### SUMMARY

This application provides a screen cover, a foldable display module, and an electronic device, to improve impact resistance performance of the foldable display module.

A first aspect of this application provides a screen cover, configured to cover a flexible display. The screen cover includes:
a buffer layer, where the buffer layer absorbs stress of impact through elastic deformation;
a first film layer, covering a side that is of the buffer layer and that is away from the flexible display, where a modulus of the first film layer is greater than a modulus of the buffer layer, and the first film layer is bonded to the buffer layer by using a first adhesive layer; and
a second film layer, covering a side that is of the buffer layer and that is close to the flexible display, where a modulus of the second film layer is greater than the modulus of the buffer layer, and the second film layer is bonded to the buffer layer by using a second adhesive layer.

The screen cover is configured to cover the flexible display, and can be folded together with the flexible display. The screen cover includes the buffer layer, the first film layer, and the second film layer. The buffer layer absorbs stress of impact through elastic deformation, to reduce tensile strain inside the flexible display. The first film layer covers the side that is of the buffer layer and that is away from the flexible display, that is, the first film layer forms an outer surface of the screen cover. The modulus of the first film layer is greater than the modulus of the buffer layer, to increase strength of the outer surface of the screen cover, and prevent damage such as a scratch on the outer surface of the screen cover. The first film layer is bonded to the buffer layer by using the first adhesive layer. The first adhesive layer is disposed to separate deformation of the first film layer from that of the buffer layer, and the first adhesive layer can generate shear deformation to alleviate conduction of tensile strain on a lower surface of the first film layer to the buffer layer. The second film layer covers the side that is of the buffer layer and that is close to the flexible display, that is, the second film layer is configured to connect to a surface of the flexible display. The modulus of the second film layer is greater than the modulus of the buffer layer, to increase strength of an inner surface of the screen cover, and prevent impact damage on the flexible display caused by large deformation of the inner surface of the screen cover. The second film layer is bonded to the buffer layer by using the second adhesive layer. The second adhesive layer is disposed to separate deformation of the second film layer from that of the buffer layer, and the second adhesive layer can generate shear deformation to alleviate conduction of tensile strain on a lower surface of the buffer layer to the second film layer.

Optionally, a thickness of the second film layer is 25 µm to 150 µm, so that the screen cover has good impact resistance performance, and it can be ensured that the screen cover has high folding performance.

Optionally, a thickness of the second film layer is 25 µm to 75 µm, so that the screen cover has good impact resistance performance, and it can be ensured that the screen cover has excellent folding performance.

Optionally, the modulus of the second film layer is not less than 1 GPa, to ensure that the second film layer does not generate large deformation after the screen cover is impacted.

Optionally, a material of the second film layer is colorless polyimide, polyester, epoxy resin, or ultra thin glass.

Optionally, the second film layer and the first film layer are made of a same material, to simplify a processing technology of the screen cover, and reduce production costs of the screen cover.

A second aspect of this application provides a foldable display module, including:
a flexible display; and
a screen cover, covering a surface of the flexible display, where the screen cover is any one of the foregoing screen covers.

A third aspect of this application provides a foldable display module, including:
a flexible display; and
a screen cover, covering a surface of the flexible display, where the screen cover includes:
   a buffer layer, where the buffer layer absorbs stress of impact through elastic deformation; and
   a first film layer, covering a side that is of the buffer layer and that is away from the flexible display, where a modulus of the first film layer is greater than a modulus of the buffer layer, and the first film layer is bonded to the buffer layer by using a first adhesive layer.

The buffer layer is bonded to the surface of the flexible display by using a third adhesive layer, and a thickness of the third adhesive layer is not less than half of a thickness of the buffer layer.

The foldable display module includes the flexible display and the screen cover. The screen cover covers the surface of the flexible display, and the screen cover includes the buffer layer and the first film layer. The buffer layer absorbs stress of impact through elastic deformation, to reduce tensile strain inside the flexible display. The first film layer covers the side that is of the buffer layer and that is away from the flexible display, that is, the first film layer forms an outer surface of the screen cover. The modulus of the first film layer is greater than the modulus of the buffer layer, to increase strength of the outer surface of the screen cover, and prevent damage such as a scratch on the outer surface of the screen cover. The first film layer is bonded to the buffer layer by using the first adhesive layer. The first adhesive layer is disposed to separate deformation of the first film layer from that of the buffer layer, and prevent strain on the buffer layer from conducting to the first film layer. The buffer layer is bonded to the surface of the flexible display by using the third adhesive layer, and the thickness of the third adhesive layer is not less than half of the thickness of the buffer layer. The third adhesive layer with a large thickness is used to isolate the buffer layer from the flexible display, thereby alleviating conduction of strain on the buffer layer to the flexible display.

Optionally, the thickness of the buffer layer is not greater than 50 µm, and the thickness of the third adhesive layer is 15 µm to 75 µm.

Optionally, the thickness of the buffer layer is 50 µm to 100 µm, and the thickness of the third adhesive layer is 25 µm to 100 µm.

Optionally, the thickness of the buffer layer is 100 µm to 150 µm, and the thickness of the third adhesive layer is 50 µm to 125 µm.

Optionally, the thickness of the buffer layer is 150 µm to 200 µm, and the thickness of the third adhesive layer is 50 µm to 150 µm.

Optionally, the thickness of the buffer layer is not less than 200 µm, and the thickness of the third adhesive layer is not less than 75 µm.

A fourth aspect of this application provides an electronic device, including any one of the foregoing foldable display modules.

It should be understood that the foregoing general description and the following detailed description are merely examples, and cannot limit this application.

### BRIEF DESCRIPTION OF DRAWINGS

FIG. 1 is a schematic diagram of a structure of a foldable display module in the conventional technology;
FIG. 2 is a schematic diagram of a structure of another foldable display module in the conventional technology;
FIG. 3 is a schematic diagram of an impact test with a falling ball;
FIG. 4 is a schematic diagram of a structure of a first foldable display module according to an embodiment of this application;
FIG. 5 is a status diagram of deformation of a foldable display module in an impact scenario;
FIG. 6 shows force analysis of transverse deformation occurring in FIG. 5;
FIG. 7 is a schematic diagram of bending deformation occurring in FIG. 5;
FIG. 8 is a schematic diagram of a structure of a second foldable display module according to an embodiment of this application; and
FIG. 9 is a schematic diagram of a structure of a third foldable display module according to an embodiment of this application.

Reference numerals:
01: plane area;
02: bending area;
03: flexible filler;
1: screen cover;
11: buffer layer;
12: first film layer;
13: first adhesive layer;
14: second film layer;
15: second adhesive layer;
16: third adhesive layer;
2: flexible display;
21: polarizer;
22: panel; and
3: support assembly.

The accompanying drawings herein are incorporated into the specification and constitute a part of the specification, show embodiments conforming to this application, and are used together with the specification to explain a principle of this application.

### DESCRIPTION OF EMBODIMENTS

For ease of understanding technical solutions of this application, the following describes embodiments of this application in detail with reference to accompanying drawings.

Terms used in embodiments of this application are merely for the purpose of describing specific embodiments, but are not intended to limit this application. The terms "a", "the" and "this" of singular forms used in embodiments and the appended claims of this application are also intended to include plural forms, unless otherwise specified in the context clearly.

It should be understood that the term "and/or" in this specification describes only an association relationship of associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that orientation words such as "above", "below", "left", and "right" described in embodiments of this application are described from perspectives shown in the accompanying drawings, and shall not be understood as a limitation on embodiments of this application. Moreover, in the context, it also should be understood that, when it is mentioned that one element is connected "above" or "below" another element, the element can be directly connected "above" or "below" the another element, or may be indirectly connected "above" or "below" the another element through an intermediate element.

Embodiments of this application provide an electronic device, including a foldable display module. The electronic device may be a common mobile terminal like a mobile phone or a tablet computer, and the electronic device may be in a folded state or an unfolded state. In the folded state, the foldable display module is bent together with the electronic device. In the unfolded state, the foldable display module is unfolded together with the electronic device into a plane. The foldable display module provided in embodiments of this application includes a screen cover 1, a flexible display 2, and a support assembly 3. The flexible display 2 may be an integrated flexible display screen, or may be a display screen formed by splicing two rigid displays and one flexible display located between the two rigid displays. The support assembly 3 supports the flexible display 2, and the screen cover 1 covers a side that is of the flexible display 2 and that is away from the support assembly 3. In other words, the screen cover 1 is attached to an outer surface of the flexible display 2, and the screen cover 1 protects the flexible display 2 and improves surface flatness of the flexible display 2. The screen cover 1 has light transmission, and an image displayed on the flexible display 2 may be seen through the screen cover 1. In addition, the screen cover 1 can be bent or flattened synchronously with the flexible display 2, to adapt to switching between an unfolded state and a folded state of the foldable display module.

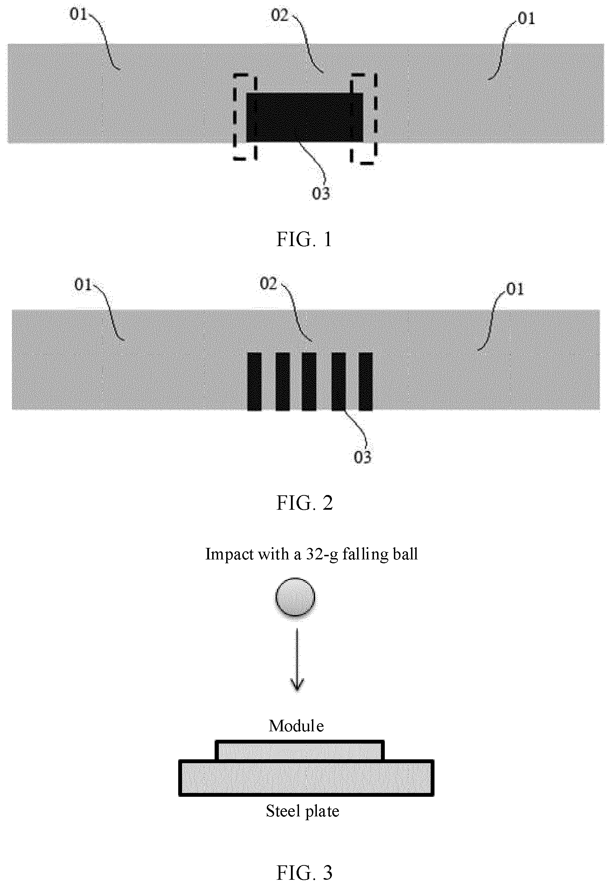

As a protective layer of a screen, a screen cover plays a most important role in an impact resistance capability of a module. Therefore, structural optimization of the screen cover is naturally one of important improvement directions for improving impact resistance performance of a foldable display module. Refer to FIG. 1 and FIG. 2. A screen cover mainly includes a plane area 01 and a bending area 02. The bending area 02 is located in the middle, and the plane area 01 is distributed on two sides of the bending area 02. The plane area 01 does not need to be bent or deformed, that is, the plane area 01 always maintains a plane state. The bending area 02 may be bent and flattened, so that the screen cover is folded and unfolded together with a flexible display.

As shown in FIG. 1, thick cover glass (100 µm to 200 µm) is used in the plane area 01, and a thickness of the bending area 02 is less than that of the plane area 01. That is, partial thinning is performed on the bending area 02, and the partially thinned part is filled by a flexible filler 03. The flexible filler 03 is a low modulus polymer material. To implement a bending characteristic of glass, a thickness of the glass generally needs to be controlled within 70 µm, that is, a thickness of the bending area 02 does not exceed 70 µm. According to a current partial thinning technology, the thick glass used is generally 100 µm to 200 µm, that is, a thickness of the plane area 01 is 100 µm to 200 µm. Compared with the 500 µm cover glass in a bar-type phone, the plane area 01 differs greatly in rigidity. Therefore, it cannot be ensured that impact resistance performance of the plane area 01 is consistent with that of the bar-type phone, and the bending area 02 has a weaker impact resistance capability due to the thinner glass. It is difficult for the screen cover with such a structure to meet a requirement of impact resistance performance.

As shown in FIG. 2, thick cover glass (100 µm to 500 µm) is used in the plane area 01, and a hole area is disposed on the bending area 02. That is, partial etching (a through-hole may be etched or a blind hole may be etched) is performed on the bending area 02, and the etched hole area is filled by a flexible filler 03. The flexible filler 03 is a low modulus polymer material. In this solution, because partial etching is performed on the bending area 02, the bending area 02 has a regional section difference of a hole area location, and a stress concentration point is formed on the screen when impact occurs, causing poor impact resistance reliability of the bending area.

Due to insufficient impact resistance reliability of the screen covers of the foregoing two structure types, the foldable display module is prone to a problem of broken bright spots. According to the second failure criterion for brittle materials, a main cause of broken bright spots on a screen is that when a foldable display module is affected by external impact, a thin film transistor (Thin film transistor, TFT) in a panel structure is subject to impact compressive stress, and a part of the thin film transistor is bent and deformed. As a result, tensile strain on the TFT exceeds limit strain, and a short circuit or an open circuit occurs in a related area, causing display exceptions such as broken bright spots. Refer to FIG. 3. Impact resistance performance of a foldable display module may be evaluated through an impact test with a falling ball, that is, a steel ball of a specified weight (for example, 32 g) freely falls onto a product from a specified falling height, to impact a product, and then appearance and various aspects of performance of the product are checked. In a current laminated structure solution, foldable display modules perform extremely poorly in tests of falling-ball impact resistance. For example, the falling-ball impact resistance capability of a module of the Mate Xs is only 4.5 cm for the plane area and 2.8 cm for the bending area, which cannot meet basic requirements of users for impact resistance performance in daily use.

In addition, the cover glass in both the foregoing two structures needs to be filled by the flexible filler 03. If no trace is left in optical terms, it needs to be ensured that refractive indexes of the glass and the polymer material are highly matched (generally, six decimal places of the refractive indexes of the two materials need to be consistent). However, because a molecular weight of the polymer material is generally distributed in a form of normal distribution, precise control of the refractive index cannot be implemented. Therefore, a requirement of no light shadow cannot be met in optical terms, affecting appearance of a foldable display module.

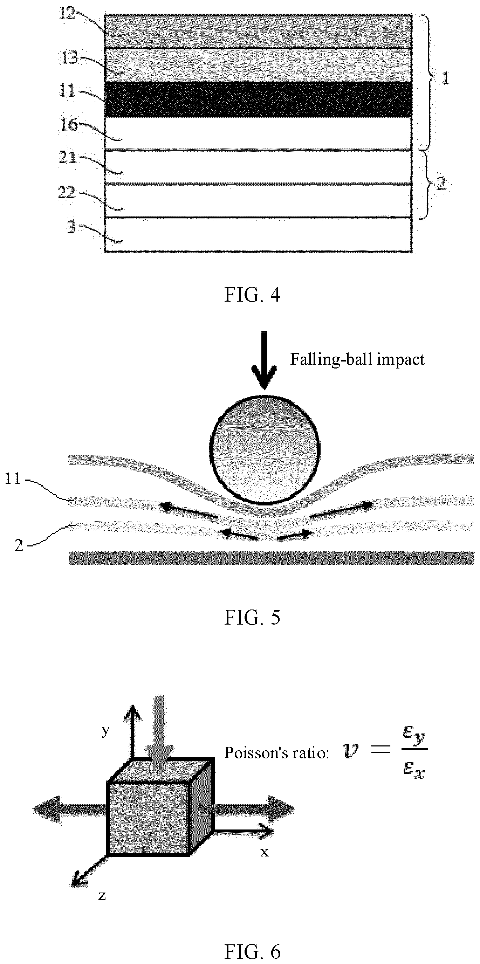

For a foldable display module provided in Embodiment 1 of this application, refer to FIG. 4. The foldable display module includes a screen cover 1, a flexible display 2, and a support assembly 3. The flexible display 2 includes a polarizer (Polarizer, POL) 21 and a panel 22. The polarizer 21 is disposed on a side that is of the panel 22 and that faces the screen cover 1. A TFT is disposed in the panel 22. The screen cover 1 is configured to cover the flexible display 2, and can be folded together with the flexible display 2. The screen cover 1 is bonded to a surface of the flexible display 2 by using a third adhesive layer 16 (for example, OCA). The screen cover 1 includes at least two layers of structures, and the layers are sequentially stacked to form a laminated structure design, so that the screen cover 1 forms a continuous surface structure, to improve appearance of the foldable display module. The screen cover 1 includes at least one buffer layer 11. For example, the screen cover 1 may include a buffer layer 11 and a first film layer 12. The first film layer 12 covers a side that is of the buffer layer 11 and that is away from the flexible display 2, that is, the first film layer 12 forms an outer surface of the screen cover 1. A transparent buffer layer 11 with an appropriate modulus is selected as the buffer layer 11. That is, the buffer layer 11 absorbs stress of impact through elastic deformation, to protect a screen and greatly improve impact resistance performance of the module laminate. A modulus of the first film layer 12 is greater than a modulus of the buffer layer 11, to increase strength of the outer surface of the screen cover 1, and prevent damage such as a scratch on the outer surface of the screen cover 1. The first film layer 12 is bonded to the buffer layer 11 by using a first adhesive layer 13. The first adhesive layer 13 is disposed to separate deformation of the first film layer 12 from that of the buffer layer 11, and the first adhesive layer 13 can generate shear deformation to alleviate conduction of tensile strain on a lower surface of the first film layer 12 to the buffer layer 11.

The buffer layer 11 is made of a transparent material whose modulus is 10 Mpa to 200 Mpa. For example, the modulus of the buffer layer 11 may be 10 Mpa, 30 Mpa, 50 Mpa, 60 Mpa, 80 Mpa, 100 Mpa, 110 Mpa, 130 Mpa, 150 Mpa, 160 Mpa, 180 Mpa, 200 Mpa, or the like. In an optional implementation, the buffer layer 11 is made of a thermoplastic PU (Thermoplastic PU, TPU) material.

The first film layer 12 is made of a transparent material with a high modulus, and the modulus of the first film layer 12 is far greater than the modulus of the buffer layer 11. The first film layer 12 needs to meet characteristics of being bendable and having high surface strength. For example, the first film layer 12 may be made of a polyester (Polyethylene terephthalate, PET) material. The first adhesive layer 13 may be an optical clear adhesive (Optical clear adhesive, OCA). A modulus of the first adhesive layer 13 is far less than the modulus of the buffer layer 11. When the buffer layer 11 is deformed due to impact, the first adhesive layer 13 can generate shear deformation to store energy, so that the buffer layer 11 and the first film layer 12 can form respective neutral layers, and the deformation of the buffer layer 11 does not affect the first film layer 12.

To describe impact resistance performance of the screen cover 1 provided in this embodiment, a comparison experiment is performed on impact resistance performance of common foldable display modules and impact resistance performance of foldable display modules that use the screen cover provided in this embodiment. For results of the comparison experiment, refer to Table 1. The specific experimental manner is an impact test with a falling ball (refer to FIG. 3). Except for a structure of the screen cover 1, other parameters of the foldable display modules according to this embodiment in each group are the same, and other experimental conditions are also the same. Each experimental group represents a group of sample foldable display modules, and an experimental result of the group is an average value of experimental results of the group of sample foldable display modules.

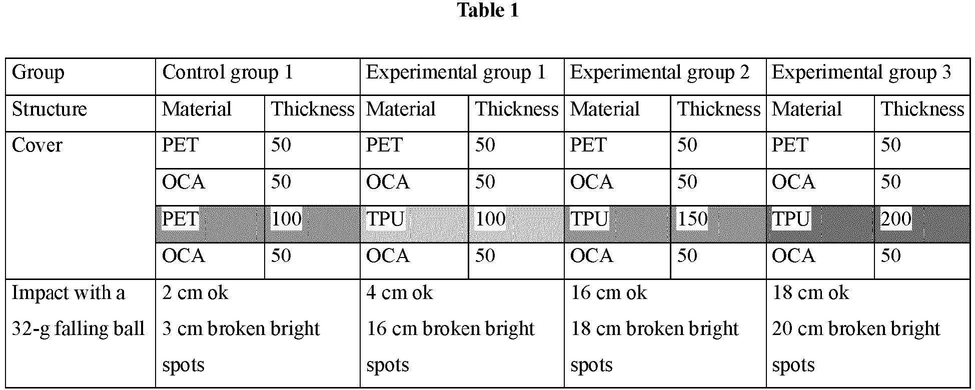

It may be learned from the experimental data in Table 1 that, Control group 1 uses a PET layer without buffer performance, and a height of falling-ball impact resistance of the module is 2 cm. Experimental group 1 to Experimental group 3 use TPU layers with buffer effect, and heights of falling-ball impact resistance of the modules are 14 cm, 16 cm, and 18 cm respectively. Therefore, in the screen cover 1 provided in this embodiment of this application, the buffer layer 11 is disposed to effectively reduce stress of impact, and reduce tensile strain on the TFT layer caused by the stress of impact, thereby improving impact resistance performance of the foldable display module. In addition, as a thickness of the buffer layer 11 increases, impact resistance performance of the screen cover 1 gradually improves. However, it may be learned from comparison between Experimental group 1 to Experimental group 3 that, when a thickness of a buffer layer (TPU) is increased from 100 µm to 200 µm, the thickness of the buffer layer is doubled, but impact resistance performance of the foldable display module is not improved accordingly. For example, when a 100 µm buffer layer is used, a height of falling-ball impact resistance of the module is 14 cm, but when the thickness of the buffer layer is increased from 100 µm to 200 µm, a height of falling-ball impact resistance of the module is 18 cm. The height of falling-ball impact resistance of the module is increased by only 4 cm.

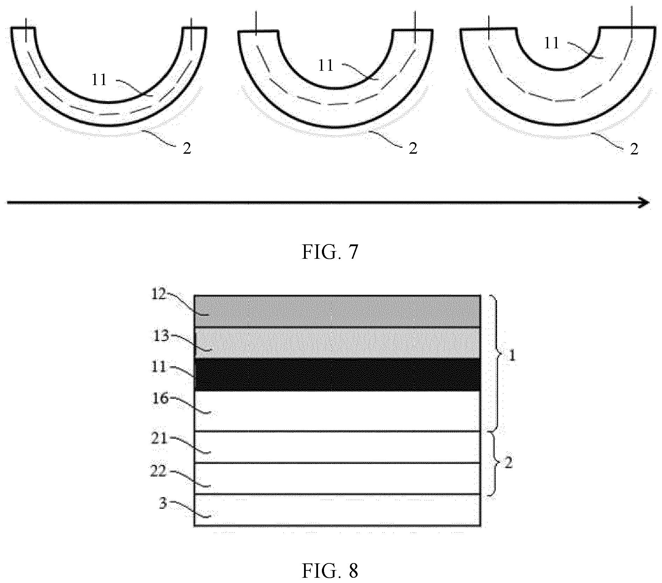

Refer to FIG. 5 to FIG. 7. It may be further learned through analysis that, in an impact scenario, there are two sources for the TFT layer to generate tensile strain. One is shown in FIG. 6. That is, the TFT layer generates transverse deformation under longitudinal impact compressive stress. The other is shown in FIG. 7. Tensile strain is generated due to partial bending of the laminated structure of the foldable display module in the impact process, and dashed lines represent the neutral layer of the buffer layer 11.

It may be learned from FIG. 6 that, the buffer layer 11 can reduce longitudinal stress of impact, and reduce transverse deformation of the TFT layer under the stress of impact. Therefore, impact resistance performance of the screen cover 1 can be improved by disposing the buffer layer 11. It may be learned from FIG. 7 that, along a direction indicated by an arrow, a thickness of the buffer layer 11 gradually increases, and a distance between a lower surface of the buffer layer 11 and the neutral layer of the buffer layer 11 becomes longer, and tensile strain on the lower surface of the buffer layer 11 becomes larger. Because the lower surface of the buffer layer 11 is close to the TFT layer in the panel, the tensile strain on the lower surface of the buffer layer 11 may conduct to the TFT layer in the panel, causing the tensile strain on the TFT layer in the panel to increase. Therefore, when the buffer layer 11 is thickened, tensile stress on the lower surface of the buffer layer 11 increases, and when the buffer layer 11 is close to the panel, affected by the tensile strain on the lower surface of the buffer layer 11, the tensile strain on the TFT layer increases. Consequently, an increase in the thickness of the buffer layer 11 cannot significantly improve impact resistance performance of the screen cover 1.

For a foldable display module provided in Embodiment 2 of this application, refer to FIG. 8. The foldable display module includes a screen cover 1, a flexible display 2, and a support assembly 3. The screen cover 1 covers a surface of the flexible display 2, and the screen cover 1 includes a buffer layer 11 and a first film layer 12. The buffer layer 11 absorbs stress of impact through elastic deformation, to reduce tensile strain inside the flexible display 2. The first film layer 12 covers a side that is of the buffer layer 11 and that is away from the flexible display 2, that is, the first film layer 12 forms an outer surface of the screen cover 1. A modulus of the first film layer 12 is greater than a modulus of the buffer layer 11, to increase strength of the outer surface of the screen cover 1, and prevent damage such as a scratch on the outer surface of the screen cover 1. The first film layer 12 is bonded to the buffer layer 11 by using a first adhesive layer 13. The first adhesive layer 13 is disposed to separate deformation of the first film layer 12 from that of the buffer layer 11, and the first adhesive layer 13 can generate shear deformation to alleviate conduction of tensile strain on a lower surface of the first film layer 12 to the buffer layer 11. The buffer layer 11 is bonded to the surface of the flexible display 2 by using a third adhesive layer 16, and a thickness of the third adhesive layer 16 is not less than half of a thickness of the buffer layer 11. The third adhesive layer 16 with a large thickness is used to isolate the buffer layer 11 from the flexible display 2, and the third adhesive layer 16 can generate shear deformation to effectively alleviate conduction of strain on the buffer layer 11 to the flexible display 2.

Specifically, a modulus of the third adhesive layer 16 is far less than the modulus of the buffer layer 11. When the thickness of the buffer layer 11 is increased, the thickness of the third adhesive layer 16 (for example, an OCA) on a lower surface of the buffer layer 11 is also increased. That is, the thickness of the OCA on the lower surface of the buffer layer 11 needs to match the thickness of the buffer layer 11. A distance between the lower surface of the buffer layer 11 and the flexible display 2 may be increased by increasing the thickness of the third adhesive layer 16, so that it is difficult for the strain on the buffer layer 11 to conduct to a TFT layer. In addition, because a modulus of the OCA is generally 10 Kpa to 100 Kpa, which is far less than the modulus (10 Mpa to 200 Mpa) of the buffer layer 11, when the module is partially bent in an impact process, the OCA may generate shear deformation, to store strain on the lower surface of the buffer layer 11 in a form of shear strain energy, thereby alleviating downward conduction of the strain. Specific solutions are as follows:
(1) The thickness of the buffer layer 11 is not greater than 50 µm, and the thickness of the third adhesive layer 16 is 15 µm to 75 µm. That is, when the thickness of the buffer layer 11 is less than or equal to 50 µm, the thickness of the OCA is preferably 15 µm to 75 µm. Typically but not as a limitation, when the thickness of the buffer layer 11 is 25 µm, the thickness of the OCA is preferably 15 µm to 25 µm, for example, the thickness of the OCA is 15 µm or 25 µm. When the thickness of the buffer layer 11 is 50 µm, the thickness of the OCA is preferably 25 µm to 50 µm, for example, the thickness of the OCA is 25 µm or 50 µm.
(2) The thickness of the buffer layer 11 is 50 µm to 100 µm, and the thickness of the third adhesive layer 16 is 25 µm to 100 µm. That is, when the thickness of the buffer layer 11 is between 50 µm and 100 µm, the thickness of the OCA is preferably 25 µm to 100 µm. Typically but not as a limitation, when the thickness of the buffer layer 11 is 100 µm, the thickness of the OCA is preferably 50 µm to 75 µm, for example, the thickness of the OCA is 50 µm or 75 µm.
(3) The thickness of the buffer layer 11 is 100 µm to 150 µm, and the thickness of the third adhesive layer 16 is 50 µm to 125 µm. That is, when the thickness of the buffer layer 11 is between 100 µm and 150 µm, the thickness of the OCA is preferably 50 µm to 125 µm. Typically but not as a limitation, when the thickness of the buffer layer 11 is 150 µm, the thickness of the OCA is preferably 75 µm to 100 µm, for example, the thickness of the OCA is 75 µm or 100 µm.
(4) The thickness of the buffer layer 11 is 150 µm to 200 µm, and the thickness of the third adhesive layer 16 is 50 µm to 150 µm. That is, when the thickness of the buffer layer 11 is between 150 µm and 200 µm, the thickness of the OCA is preferably 50 µm to 150 µm. Typically but not as a limitation, when the thickness of the buffer layer 11 is 175 µm, the thickness of the OCA is preferably 75 µm to 125 µm, for example, the thickness of the OCA is 75 µm, 100 µm, or 125 µm.
(5) The thickness of the buffer layer 11 is not less than 200 µm, and the thickness of the third adhesive layer 16 is not less than 75 µm. That is, when the thickness of the buffer layer 11 is greater than or equal to 200 µm, the thickness of the OCA is preferably greater than or equal to 75 µm.

To describe impact resistance performance of the screen cover 1 provided in this embodiment, a comparison experiment is performed on impact resistance performance of foldable display modules with different thicknesses of the third adhesive layer 16. For results of the comparison experiment, refer to Table 2. The specific experimental manner is an impact test with a falling ball (refer to FIG. 3). Except for a structure of the screen cover 1, other parameters of the foldable display modules according to this embodiment in each group are the same, and other experimental conditions are also the same. Each experimental group represents a group of sample foldable display modules, and an experimental result of the group is an average value of experimental results of the group of sample foldable display modules.

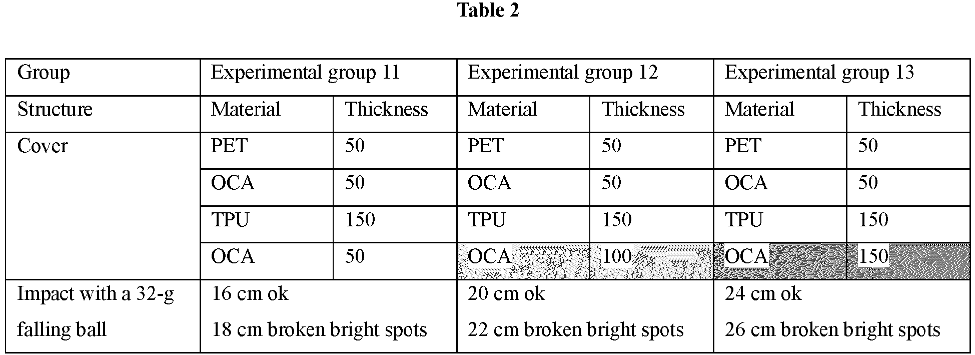

It may be learned from the experimental data in Table 2 that, impact resistance performance of the foldable display module can be effectively improved by increasing the thickness of the third adhesive layer 16.

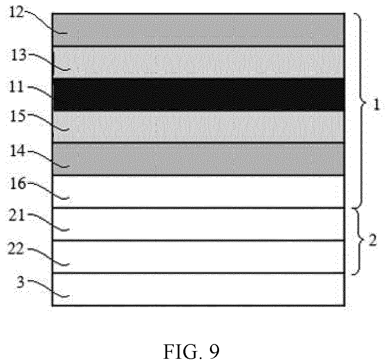

For a foldable display module provided in Embodiment 3 of this application, refer to FIG. 9. The foldable display module includes a screen cover 1, a flexible display 2, and a support assembly 3. The screen cover 1 is configured to cover the flexible display 2, and can be folded together with the flexible display 2. The screen cover 1 includes a buffer layer 11, a first film layer 12, and a second film layer 14. The buffer layer 11 absorbs stress of impact through elastic deformation, to reduce tensile strain inside the flexible display 2. The first film layer 12 covers a side that is of the buffer layer 11 and that is away from the flexible display 2, that is, the first film layer 12 forms an outer surface of the screen cover 1. A modulus of the first film layer 12 is greater than a modulus of the buffer layer 11, to increase strength of the outer surface of the screen cover 1, and prevent damage such as a scratch on the outer surface of the screen cover 1. The first film layer 12 is bonded to the buffer layer 11 by using a first adhesive layer 13. The first adhesive layer 13 is disposed to separate deformation of the first film layer 12 from that of the buffer layer 11, and the first adhesive layer 13 can generate shear deformation to alleviate conduction of tensile strain on a lower surface of the first film layer 12 to the buffer layer 11. The second film layer 14 covers a side that is of the buffer layer 11 and that is close to the flexible display 2, that is, the second film layer 14 is configured to connect to a surface of the flexible display 2. A modulus of the second film layer 14 is greater than the modulus of the buffer layer 11, to increase strength of an inner surface of the screen cover 1, and prevent impact damage on the flexible display 2 caused by large deformation of the inner surface of the screen cover 1. The second film layer 14 is bonded to the buffer layer 11 by using a second adhesive layer 15. The second adhesive layer 15 is disposed to separate deformation of the second film layer 14 from that of the buffer layer 11, and the second adhesive layer 15 can generate shear deformation to alleviate conduction of tensile strain on a lower surface of the buffer layer 11 to the second film layer 14.

The second film layer 14 is made of a transparent material with a high modulus, and the modulus of the second film layer 14 is far greater than the modulus of the buffer layer 11. The second film layer 14 needs to meet characteristics of being bendable and having high surface strength. The modulus and a thickness of the second film layer 14 are controlled to prevent downward conduction of strain. The second adhesive layer 15 may be an optical clear adhesive (Optical clear adhesive, OCA). A modulus of the first adhesive layer 13 is far less than the modulus of the buffer layer 11. When the buffer layer 11 is deformed due to impact, the first adhesive layer 13 can generate shear deformation to store energy, so that the buffer layer 11 and the second film layer 14 can form respective neutral layers, and the deformation of the buffer layer 11 does not affect the second film layer 14.

Further, the thickness of the second film layer 14 is 25 µm to 150 µm. For example, the thickness of the second film layer 14 may be 25 µm, 35 µm, 45 µm, 55 µm, 60 µm, 65 µm, 75 µm, 85 µm, 95 µm, 100 µm, 110 µm, 120 µm, 130 µm, 140 µm, 150 µm, or the like, so that the screen cover 1 has good impact resistance performance, and it can be ensured that the screen cover 1 has high folding performance. When the thickness of the second film layer 14 is less than 25 µm, the second film layer 14 is excessively thin. As a result, the deformation of the buffer layer 11 may conduct to the flexible display 2, and it is difficult for the impact resistance performance of the foldable display module to meet a use requirement. When the thickness of the second film layer 14 is greater than 150 µm, the second film layer 14 is excessively thick. Because the second film layer 14 is a high modulus material, it is inconvenient to fold the second film layer 14. In addition, the excessively thick second film layer 14 causes an increase in an overall thickness of the foldable display module, thereby affecting folding performance of the foldable display module.

Preferably, the thickness of the second film layer 14 is 25 µm to 75 µm. For example, the thickness of the second film layer 14 may be 25 µm, 30 µm, 35 µm, 40 µm, 45 µm, 50 µm, 55 µm, 60 µm, 65 µm, 70 µm, 75 µm, or the like, so that the screen cover 1 has good impact resistance performance, and it can be ensured that the screen cover 1 has excellent folding performance.

Further, the modulus of the second film layer 14 shall be not less than 1 Gpa, to ensure that the second film layer 14 does not generate large deformation after the screen cover 1 is impacted, thereby preventing the deformation of the buffer layer 11 from conducting to the flexible display 2.

Further, a material of the second film layer 14 may be colorless polyimide (Colorless polyimide, CPI), polyester (Polyethylene terephthalate, PET), epoxy resin (Epoxy resin, EP), ultra thin glass (Ultra thin glass, UTG), or the like. Further, the second film layer 14 and the first film layer 12 are made of a same material, to simplify a processing technology of the screen cover 1, and reduce production costs of the screen cover 1.

To describe impact resistance performance of the screen cover 1 provided in this embodiment, a comparison experiment is performed on impact resistance performance of foldable display modules having screen covers with different structures. For results of the comparison experiment, refer to Table 3. The specific experimental manner is an impact test with a falling ball (refer to FIG. 3). Except for a structure of the screen cover 1, other parameters of the foldable display modules according to this embodiment in each group are the same, and other experimental conditions are also the same. Each experimental group represents a group of sample foldable display modules, and an experimental result of the group is an average value of experimental results of the group of sample foldable display modules.

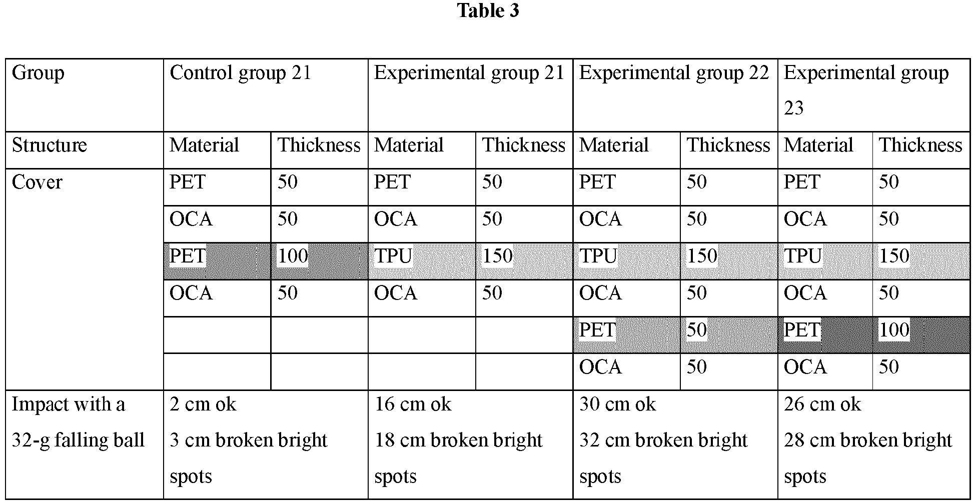

It may be learned from the experimental data in Table 3 that, Control group 21 uses a PET layer without buffer performance, and a height of falling-ball impact resistance of the module is 2 cm. Experimental group 21 uses a TPU layer with buffer effect, and a height of falling-ball impact resistance of the module is 16 cm. For Experimental group 22 and Experimental group 23, high modulus PET (that is, the second film layer 14) is added between TPU (that is, the buffer layer) and the flexible display, and heights of falling-ball impact resistance of the modules are 30 cm and 26 cm respectively. Therefore, in the screen cover 1 provided in this embodiment of this application, the buffer layer 11 is disposed to effectively reduce stress of impact, and reduce tensile strain on a TFT layer caused by the stress of impact, thereby improving impact resistance performance of the foldable display module. The second film layer 14 is added between the buffer layer 11 and the flexible display 2 to further improve the impact resistance performance of the foldable display module.

The foregoing descriptions are merely preferred embodiments of this application, and are not intended to limit this application. For a person skilled in the art, this application may have various modifications and variations. Any modification, equivalent replacement, or improvement made without departing from the spirit and principle of this application shall fall within the protection scope of this application.

## Claims

1. A screen cover, configured to cover a flexible display, wherein the screen cover comprises:
a buffer layer, wherein the buffer layer absorbs stress of impact through elastic deformation;
a first film layer, covering a side that is of the buffer layer and that is away from the flexible display, wherein a modulus of the first film layer is greater than a modulus of the buffer layer, and the first film layer is bonded to the buffer layer by using a first adhesive layer; and
a second film layer, covering a side that is of the buffer layer and that is close to the flexible display, wherein a modulus of the second film layer is greater than the modulus of the buffer layer, and the second film layer is bonded to the buffer layer by using a second adhesive layer.

2. The screen cover according to claim 1, wherein a thickness of the second film layer is 25 µm to 150 µm.

3. The screen cover according to claim 1, wherein a thickness of the second film layer is 25 µm to 75 µm.

4. The screen cover according to claim 1, wherein the modulus of the second film layer is not less than 1 GPa.

5. The screen cover according to claim 1, wherein a material of the second film layer is colorless polyimide, polyester, epoxy resin, or ultra thin glass.

6. The screen cover according to claim 1, wherein the second film layer and the first film layer are made of a same material.

7. A foldable display module, comprising:
a flexible display; and
a screen cover, covering a surface of the flexible display, wherein the screen cover is the screen cover according to any one of claims 1 to 6.

8. A foldable display module, comprising:
a flexible display; and
a screen cover, covering a surface of the flexible display, wherein the screen cover comprises:
a buffer layer, wherein the buffer layer absorbs stress of impact through elastic deformation; and
a first film layer, covering a side that is of the buffer layer and that is away from the flexible display, wherein a modulus of the first film layer is greater than a modulus of the buffer layer, and the first film layer is bonded to the buffer layer by using a first adhesive layer, wherein
the buffer layer is bonded to the surface of the flexible display by using a third adhesive layer, and a thickness of the third adhesive layer is not less than half of a thickness of the buffer layer.

9. The foldable display module according to claim 8, wherein the thickness of the buffer layer is not greater than 50 µm, and the thickness of the third adhesive layer is 15 µm to 75 µm.

10. The foldable display module according to claim 8, wherein the thickness of the buffer layer is 50 µm to 100 µm, and the thickness of the third adhesive layer is 25 µm to 100 µm.

11. The foldable display module according to claim 8, wherein the thickness of the buffer layer is 100 µm to 150 µm, and the thickness of the third adhesive layer is 50 µm to 125 µm.

12. The foldable display module according to claim 8, wherein the thickness of the buffer layer is 150 µm to 200 µm, and the thickness of the third adhesive layer is 50 µm to 150 µm.

13. The foldable display module according to claim 8, wherein the thickness of the buffer layer is not less than 200 µm, and the thickness of the third adhesive layer is not less than 75 µm.

14. An electronic device, comprising the foldable display module according to any one of claims 7 to 13.
